# EUROPEAN PATENT APPLICATION

(11) **EP 1 792 946 A1**
(43) Date of publication of application: **06.06.2007**
(21) Application number: 05710098.4
(22) Date of filing: 10.02.2005
(51) Int. Cl.: C08L 101/00, C08L 23/00, C08L 67/00, C08L 75/04, C08L 1/02

(54) **PLASTIC MOLDING CAPABLE OF CARBON DIOXIDE REDUCTION**

(30) Priority: 07.09.2004 JP 2004259709
(71) Applicant: Sugimoto, Ichiro, Machida-shi, Tokyo 194-0002 (JP); Sugimoto, Takako, Machida-shi, Tokyo 194-0002 (JP); Sugimoto, Chieko, Machida-shi, Tokyo 194-0002 (JP); Sugimoto, Mieko, Machida-shi, Tokyo 194-0002 (JP)
(72) Inventor: SUGIMOTO, Ichiro, Tokyo, 1940002 (JP); SUGIMOTO, Takako, Tokyo, 1940002 (JP); SUGIMOTO, Chieko, Tokyo, 1940002 (JP); SUGIMOTO, Keiichi, deceased (JP)
(74) Representative: Bannerman, David Gardner
(86) International application number: PCT/JP2005/002046
(87) International publication number: WO 2006/027861

(57) **Abstract**

A nonbiodegradable plastic molding that, when it is subjected to incineration disposal, realizes reduction of the volume of carbon dioxide emitted from nonbiodegradable plastic. With the intent to reduce the volume of carbon dioxide emitted from nonbiodegradable plastic upon incineration disposal, there is provided a nonbiodegradable plastic molding produced by molding a mixture comprising: (A) 99.9 to 70 wt% of nonbiodegradable plastic, and (B) 0.1 to 30 wt% of dry powder of compressed coconut mesocarp fiber residue.

## Description

### TECHNICAL FIELD

The present invention relates to a nonbiodegradable plastic molding. In particular, the present invention provides a nonbiodegradable plastic molding that, when it is subjected to incineration disposal, emits a reduced volume of carbon dioxide from the plastic.

### BACKGROUND ART

In the modern society, many plastic products are used and there arises a serious problem on disposal of used plastic products. As a method of disposing the used plastic products, landfill, incineration, recycling, and so on are performed.

However, only part of the used plastics is recycled. Further, many problems remain to be solved. For example, relatively high cost is necessary for their recycling, and recycled plastics have a decreased quality.

Landfill disposal has a problem in that development of new landfill results in environmental destruction and there has been a shortage of landfill. In recent years, on the other hand, biodegradable plastics having a property of being decomposed in soils to be reduced to nature have been developed and improved. Regarding such biodegradable plastics, the inventors of the present invention have found that, when dry powder of fibers contained in the mesocarp of a palm is blended to such a biodegradable plastic, the biodegradability of the plastic is increased (Patent Document 1). Also, the inventors of the present invention have found that the biodegradability of the plastic is further increased by blending dry powder of a water-swellable fiber and a fertilizer powder to the biodegradable plastic (Patent Document 2).

However, it is difficult to dispose all of the plastic products that are discarded in large amounts only by landfill, and incineration is still important in the disposal of plastics. Also, recently, attention is directed to recycling of used plastics as a fuel, and power generation by utilizing the heat to be generated in incinerating plastic products, so that the amount of incinerated plastics is considered to increase more and more.

One problem accompanying the incineration of plastics is generation of carbon dioxide as a result of combustion of the plastics. Since the twentieth century, the concentration of carbon dioxide in the air of the earth is ever increasing, which is one of major causes that accelerate the global warming. The global warming is feared to expel the global ecosystem into a fatal situation, and in order to avoid this, it is a very important issue for all the human beings to reduce the volume of emitted carbon dioxide.

However, there has been no report on plastics that emits a reduced volume of carbon dioxide when they are incinerated.
Although Patent Document 1 uses dry powder of fibers contained in the mesocarp of palm similar to that used in the present invention, the plastic used together with the powder in Patent Document 1 is a biodegradable plastic or a plastic that contains a biodegradable plastic, and hence it is different from the nonbiodegradable plastic molding of the present invention which only a nonbiodegradable plastic is used as a plastic.
Patent Document 1: JP 9-263700 A
Patent Document 2: WO 99/42527

### DISCLOSURE OF INVENTION

### Problems to be solved by the invention

The present invention has been made from the above-mentioned viewpoints, and it is an object of the present invention to provide a nonbiodegradable plastic molding that emits a reduced volume of carbon dioxide from the nonbiodegradable plastic when it is subjected to incineration disposal.

The inventors of the present invention have made extensive studies with a view to solving the above-mentioned problems. As a result, they have found that the above-mentioned object can be achieved by using a nonbiodegradable plastic and a dry powder of compressed coconut mesocarp fiber residue. The present invention has been completed based on this finding.
The gist of the present invention is as follows.
(1) A nonbiodegradable plastic molding, which is obtained by molding a mixture containing the following components:
   (A) 99.9 to 70 wt% of nonbiodegradable plastic;
   (B) 0. 1 to 30 wt% of a dry powder of compressed coconut mesocarp fiber residue.
(2) The nonbiodegradable plastic molding according to (1), wherein the dry powder of compressed coconut mesocarp fiber residue is a powder obtained by: drying a fiber residue of coconut mesocarp from which impurities containing saline matter and tannin are substantially removed to a moisture content of about 10 wt%; compressing it, processing it into a powder having a particle size of about 1 to 80 µm; and further drying the resultant powder to a moisture content of less than 3 wt%.
(3) The nonbiodegradable plastic molding according to (1) or (2), wherein the nonbiodegradable plastic is selected from the group consisting of polyolefin-based resin, polyester-based resin, and polyurethane-based resin.
(4) A nonbiodegradable plastic molding obtained by molding a mixture containing the following components:
   (A) 98.9 to 69 wt% of nonbiodegradable plastic;
   (B) 0. 1 to 30 wt% of a dry powder of compressed coconut mesocarp fiber residue; and
   (C) 1 to 10 wt% of at least one component selected from the group consisting of surfactant, colorant, antioxidant, and inorganic filler
      (provided that the sum of (B) and (C) is 1.1 to 31 wt%).
(5) The nonbiodegradable plastic molding according to (4), wherein the nonbiodegradable plastic is selected from the group consisting of polyolefin-based resin, polyester-based resin, and polyurethane-based resin.
(6) A method for reducing a volume of carbon dioxide that is emitted when a nonbiodegradable plastic is subjected to incineration disposal, comprising adding a dry powder of compressed coconut mesocarp fiber residue to the nonbiodegradable plastic.

### Advantages of the Invention

The nonbiodegradable plastic molding of the present invention has an advantage that, when it is subjected to incineration disposal, the volume of carbon dioxide emitted from the nonbiodegradable plastic is small.

### BRIEF EXPLANATION OF THE DRAWINGS

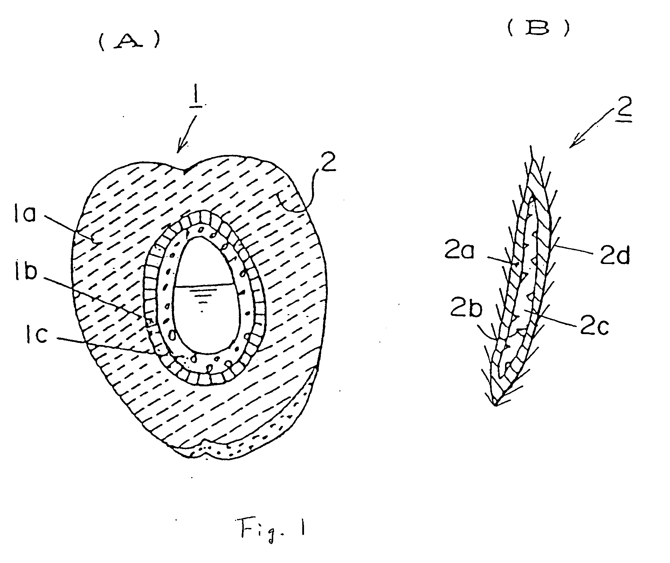

Fig. 1 (A) is a cross-sectional view of a coconut and Fig. 1 (B) is an enlarged cross-sectional view of a coconut fiber.

### DESCRIPTION OF THE PREFERRED EMBODIMENTS

Hereinafter, the present invention will be explained in detail.
The nonbiodegradable plastic molding of the present invention has a property that a less volume of carbon dioxide is emitted when it is subjected to incineration disposal, because it comprises a nonbiodegradable plastic and a dry powder of compressed coconut mesocarp fiber residue.
First, the components of the nonbiodegradable plastic molding of the present invention are explained.

### <1> Components of the nonbiodegradable plastic molding of the present invention

### (1) Nonbiodegradable plastic (component (A))

The nonbiodegradable plastic to be used in the present invention is not particularly limited as far as it does not impair the effects of the present invention.

Examples of the nonbiodegradable plastics include thermoplastic resins such as polyolefin-based resin, polyester-based resin, polystyrene-based resin, vinyl-based resin, acrylic resin, and polyamide-based resin, and thermosetting resins such as polyurethane-based resin, alkyd-based resin, amino-based resin, and epoxy-based resin, and among them, polyolefin-based resins such as polyethylene and polypropylene, polyester-based resins such as polyethylene terephthalate and polybutylene terephthalate, and polyurethane-based resins are preferable.

In the present invention, the nonbiodegradable plastic is blended in a raw material mixture of the nonbiodegradable plastic molding at a ratio of 99.9 to 70 wt%, preferably 99.6 to 70 wt%. The amount of blending may be adjusted as appropriate by addition of optional components, as long as the effects of the present invention is not impaired.

### (2) Dry powder of compressed coconut mesocarp fiber residue (component (B))

The dry powder of compressed coconut mesocarp fiber residue to be used in the present invention is not particularly limited as long as it is a powder obtained by compressing a coconut mesocarp fiber residue and drying it. Preferably, it is a powder obtained by drying a fiber residue of coconut mesocarp from which impurities containing saline matter and tannin are substantially removed to a moisture content of about 10 wt%, compressing the obtained dry fiber residue to prepare a powder having a particle size of about 1 to 80 µm, and further drying the resultant powder to a moisture content of less than 3 wt%.

Coconut (*Cocos nucifera*) is a *Palmae* plant that is widely cultivated in the tropical regions, and its fruit (coconut) is used in various ways. Fig. 1 (A) shows a cross-section of a coconut 1, inside which an endosperm 1c that has a thickness of typically 10 to 20 mm and is usually used as a palm oil, food, or a material for medicine is shown. Usually, a hard wooden endocarp 1b known as incrustation has a thickness of usually 2 to 6 mm. The incrustation of coconut is useful for producing industrial grade good activated carbon. A mesocarp 1a that is called "integument" forms the largest part of the coconut and has a thickness of typically 30 to 40 mm. Nowadays, fiber 2 in the mesocarp is mostly used for producing webbing, nets, mats, and ropes. The fiber residue to be obtained as a byproduct is processed into a compressed culture soil and used in soil improvement, but usually it is not used for other purposes.

The coconut fiber 2 to be obtained from the mesocarp 1a is classified as sclereid fiber in botany. Referring to Fig. 1(B) that shows an enlarged cross-section of the coconut fiber 2, it is apparent that structurally, the coconut fiber 2 includes a lumen membrane 2a, sawtooth projections 2b, hollow hole 2c and whisker-like twigs 2d. Usually, the whisker-like twigs 2d have a length of about 0.7 mm and a width of about 20 µm. Physically, the coconut fiber is light in weight, hard, and resilient. Further, the coconut fiber is poorly heat conductive. Further, the coconut fiber is resistant to water and air (NAGAI, Shoichiro, "Inorganic/Organic Industrial Materials Handbook" First Edition, page 788, published by Toyo Keizai Shinbun (March 20, 1960)).

The term "coconut mesocarp fiber residue" as used herein includes coconut fiber minute fragments obtained by minute fragmentation of the coconut fiber 2. A specific example thereof includes, but is not limited to, a fiber residue that is obtained when the above-mentioned fiber products are produced. Examples of the coconut mesocarp fiber residue also include minute fragments of the coconut fiber which maintains the cross-sectional shape shown in Fig. 1(B), the whisker-like twigs 2d and the lumen membrane 2a fragments that are separated from the coconut fiber 2.

The dry powder of compressed coconut mesocarp fiber residue to be used in the present invention is one obtained by compressing and drying the coconut mesocarp fiber residue to form a powder. Its production method is not particularly limited, and it is produced, for example, as follows.
That is, to obtain a dry powder of compressed coconut mesocarp fiber residue, mesocarp of coconut is exposed to fresh water for about 10 to 16 months to dissolve a pulpy substance and then, only fibers are collected. The resultant fibers are exposed to sunlight for about 2 years or more to remove saline matter and tannin contained therein, followed by forcible drying by hot air for about 8 hours to reduce the moisture content to about 10 wt%. Then, minute fragments of the fiber, that is, coconut mesocarp fiber residue is obtained and subjected to compression treatment using a press or the like to a compression ratio of 4 to 6:1. The resultant is pulverized using a pulverizer such as a hammer mill, a ball mill, a jet mill, or the like to process the powder. Removal of the saline matter and tannin and drying may be performed after the minute fragments of fiber are obtained.
The size of the dry powder of compressed coconut mesocarp fiber residue is not particularly limited, but from the viewpoints of appearance of the nonbiodegradable plastic molding containing the fiber residue, cost of energy required for pulverization, and so on, the particle size is preferably set to 1 to 80 µm.

In the present invention, while the degree of dryness of the dry powder of compressed coconut mesocarp fiber residue is not particularly limited, a dry powder of compressed coconut mesocarp fiber residue is preferably one that has been dried to have a moisture content of less than 3 wt%. The moisture content of the dry powder of compressed coconut mesocarp fiber residue may be adjusted to have the moisture content of less than 3 wt% at the stage of the production of the coconut mesocarp fiber residue, but preferably, the moisture content is reduced to about 10 wt% at the stage of the production of the coconut mesocarp fiber residue, and then, the content is further reduced to less than 3 wt% at the stage of producing the dry powder of compressed coconut mesocarp fiber residue from the coconut mesocarp fiber residue. The drying at the stage of producing the dry powder of compressed coconut mesocarp fiber residue is usually performed by hot air or the like, after adjusting the size of the powder obtained by pulverization by a sieve or the like, if necessary.

The present invention has an effect that, when it is subjected to incineration disposal, a less volume of carbon dioxide is emitted from the nonbiodegradable plastic, and the effect can be obtained presumably as follows. That is, in the step of the hot processing to produce the nonbiodegradable plastic molding of the present invention fromamixture of a drypowder of compressed coconutmesocarp fiber residue and a nonbiodegradable plastic, the dry powder of compressed coconut mesocarp fiber residue is being carbonized. At the same time, the moisture contained in the powder evaporates and expands to be released out of the mixture to form a number of micro holes of various types in the dry powder of coconut mesocarp fiber residue. The carbon dioxide generated by combustion of the nonbiodegradable plastic of the present invention is adsorbed into the holes, thereby reducing the volume of the carbon dioxide that is emitted from the nonbiodegradable plastic into the atmosphere when the nonbiodegradable plastic is incinerated. When nonbiodegradable plastics other than polyethylene that was used in the examples of the present invention described hereinbelow are used, the volume of carbon dioxide that is emitted from the nonbiodegradable plastics upon incineration is expected to be reduced as in the case of the polyethylene.

In the present invention, the dry powder of compressed coconut mesocarp fiber residue is used by being blended in a raw material mixture of the nonbiodegradable plastic molding in a ratio of 0.1 to 30 wt%, preferably 0.4 to 30 wt% . This is because if the blend ratio of the dry powder of compressed coconut mesocarp fiber residue is too low, the effects of the present invention may be insufficiently exhibited, and on the contrary, if the blend ratio is too high, molding may become difficult. However, the above-mentioned blend amount may be adjusted as appropriate depending on the blend amounts of other components. For example, when the raw material mixture of the nonbiodegradable plastic molding of the present invention is blended with at least one component selected from the group consisting of the surfactants, colorants, antioxidants, and inorganic fillers as described hereinafter (component (C)), the blend amount of the dry powder of compressed coconut mesocarp fiber residue (component (B)) and the component (C) in total is 1.1 to 31 wt%, preferably 1.4 to 31 wt%.

### (3) Other components

The nonbiodegradable plastic molding of the present invention may be optionally blended with other components in addition to the above-mentioned components. For example, to achieve desired properties, plastic additives of standards in the art may be added. Specifically, surfactants may be added to increase processability and various colorants such as pigments may be added to increase marketability. Further, antioxidants may be added for preventing oxidation of the nonbiodegradable plastics or the like, and inorganic fillers may be added in order to increase heat resistance, impact strength, storage stability, and so on of the nonbiodegradable plastics. Further, the properties of the base plastics can be altered by using modifiers such as crosslinking agents, monomer derivatives, heteromonomers, curing agents, and so on.
In the present invention, it is preferable that among these optional components, at least one component selected from the group consisting of surfactants, colorants, antioxidants, and inorganic fillers (component (C)) be blended. In that case, the blend amount of the component (C) is usually about 1 to about 10 wt% in total.
Besides, known carbon black (kitchen black), a lubricant, an antiblocking agent, and so on may be blended. These components may be added in such an amount that the effects of the present invention are not impaired while reducing an amount corresponding to the total amounts of these components from the blend amount of any one, two or three of the components (A), (B) and (C).

### <2> Production method of the nonbiodegradable plastic molding of the present invention

The production method of the nonbiodegradable plastic molding of the present invention is exemplified.
The dry powder of compressed coconut mesocarp fiber residue is usually solvent-kneaded with a nonbiodegradable plastic within the range of the above-mentioned blend ratio of the present invention and then pelletized. Further, when at least one component selected from the group consisting of surfactants, colorants, antioxidants, and inorganic fillers is blended with the nonbiodegradable plastic molding of the present invention, the component can be blended together with the dry powder of compressed coconut mesocarp fiber residue to the nonbiodegradable plastic within the rage of the above-mentioned blend ratio upon solvent-kneading. For the operation of the solvent-kneading and pelletization, a known kneading apparatus such as a Banbury mixer, a Henschel mixer, a uniaxial kneader, a biaxial kneader, a mixing roll, or a kneader is suitably used.
Subsequently, molding is performed using the obtained pellet. The molding method is not particularly limited and methods usually used for plastic molding may be used.
When a film is formed, a known film forming machines for inflation method, a T-die method, and so on may be used.
Further, the nonbiodegradable plastic molding of the present invention can be used for coating a surface of paper products and the like.

Examples of the molding produced by an injection molding machine, a vacuum molding machine, an extruder, or a blow molding machine include growing pots, posts, pipes, walling, plates, engineering plastic products, packaging, products for agriculture and fishery, daily use products, products for agriculture, building materials, and so on. These moldings can be used widely as materials, products, and so on for civil engineering, medicine, sports, greening, etc.

### EXAMPLES

### Hereinafter, the present invention will be explained in more detail by examples.

### [Production Example]

### Production of a dry powder of compressed coconut mesocarp fiber residue

To remove coconut endocarp and embryo, the coconut was immersed into fresh water for about 10 to 16 months to dissolve pulpy substance and then fiber portion was collected. Then, fiber residue that has been obtained when the fiber portion was used for producing strings, nettings, ropes, and so on was exposed to sunlight for about 2 years to remove the contained saline matter and tannin. Further, forcible drying by hot air at 105°C was performed for 8 hours or more to reduce the moisture content to 10%. Then, minute fragments having a length of 5 to 10 mm that was discharged upon net making with the fibers were collected and compressed to a compression ratio of 6:1 using a press machine . The thus obtained compressed matter was pulverized by a pulverizer and the resultant was subjected to powder processing using a hammer mill, a jet mill, and a ball mill in this order.
Thereafter, the obtained powder was classified using a sieve to obtain a dry powder of compressed coconut mesocarp fiber residue that passes 580 meshes. The thus obtained dry powder of compressed coconut mesocarp fiber residue had an average particle size of about 10 µm or less.

### (Example 1)

The dry powder of compressed coconut mesocarp fiber residue prepared in the above-mentioned Production Example and polyethylene were mixed at a ratio of 30:70 by weight to produce pellets. The pellets and polyethylene were blended at a ratio of 2.4:97.6 by weight to obtain a material for nonbiodegradable plastic moldings. The material was subjected to film formation using an inflation extrusion molding machine at a processing temperature of 160°C to mold a film molding having a thickness of 25 µm.

### (Example 2)

A film molding having a thickness of 25 µm was obtained in the same process as in Example 1 except that the above-mentioned pellets and polyethylene were blended in a ratio of 1.5:98.5 by weight.

### (Example 3)

### Measurement of volume of carbon dioxide emitted upon combustion of the nonbiodegradable plastics

The volume of carbon dioxide that is emitted upon combustion of the film moldings of the above-mentioned Example 1 and 2 was measured by High Polymer Test & Evaluation Center, Japan Chemical Innovation Institute. The tests were performed according to JIS K7217 (Analytical method for plastic combustion gases). The results showed that 1 g of the film molding of Example 1 emitted 1.1 g of carbon dioxide when it was combusted, while 1 g of the film molding of Example 2 emitted 1.2 g of carbon dioxide when it was combusted. Considering that it is said that 1 g of polyethylene emits about 3.14 g of carbon dioxide, the nonbiodegradable plastic molding of the present invention was considered to emit a remarkably reduced volume of carbon dioxide upon combustion.

### INDUSTRIAL APPLICABILITY

The nonbiodegradable plastic moldings of the present invention can be used for products of various applications. The products emit a less volume of carbon dioxide when it is subjected to incineration disposal, so that they are very useful as a countermeasure for global warming.

## Claims

1. A nonbiodegradable plastic molding, which is obtained by molding a mixture containing the following components:
(A) 99.9 to 70 wt% of nonbiodegradable plastic;
(B) 0.1 to 30 wt% of a dry powder of compressed coconut mesocarp fiber residue.

2. The nonbiodegradable plastic molding according to claim 1, wherein the dry powder of compressed coconut mesocarp fiber residue is a powder obtained by: drying a fiber residue of coconut mesocarp from which impurities containing saline matter and tannin are substantially removed to a moisture content of about 10 wt%; compressing it, processing it into a powder having a particle size of about 1 to 80 µm; and further drying the resultant powder to a moisture content of less than 3 wt%.

3. The nonbiodegradable plastic molding according to claim 1 or 2, wherein the nonbiodegradable plastic is selected from the group consisting of polyolefin-based resin, polyester-based resin, and polyurethane-based resin.

4. A nonbiodegradable plastic molding obtained by molding a mixture containing the following components:
(A) 98.9 to 69 wt% of nonbiodegradable plastic;
(B) 0.1 to 30 wt% of a dry powder of compressed coconut mesocarp fiber residue; and
(C) 1 to 10 wt% of at least one component selected from the group consisting of surfactant, colorant, antioxidant, and inorganic filler
(provided that the sum of (B) and (C) is 1.1 to 31 wt%).

5. The nonbiodegradable plastic molding according to claim 4, wherein the nonbiodegradable plastic is selected from the group consisting of polyolefin-based resin, polyester-based resin, and polyurethane-based resin.

6. A method for reducing a volume of carbon dioxide that is emitted when a nonbiodegradable plastic is subjected to incineration disposal, comprising adding a dry powder of compressed coconut mesocarp fiber residue to the nonbiodegradable plastic.
